# DEMANDE DE BREVET EUROPEEN

(11) **EP 4 570 809 A1**
(43) Date de publication de la demande: **18.06.2025**
(21) Numéro de dépôt: 24219601.2
(22) Date de dépôt: 12.12.2024
(51) Int. Cl.: C07F 3/00, C07F 15/06, B01J 37/03

(54) **SYNTHÈSE D'UN MATÉRIAU SPHÉRIQUE À STRUCTURE IMIDAZOLATE ZÉOLITHIQUE**

(30) Priorité: 13.12.2023 FR 2314102
(71) Demandeur: Commissariat à l'Energie Atomique et aux Energies Alternatives, 75015 Paris (FR)
(72) Inventeur: ANDRIOTOU, Despoina, 38054 GRENOBLE CEDEX 09 (FR); PERALTA, David, 38054 GRENOBLE CEDEX 09 (FR)
(74) Mandataire: Brevalex

(57) **Abrégé**

L'invention se rapporte à un procédé de synthèse d'un matériau à structure imidazolate zéolithique comprenant du zinc ou du cobalt et se présentant sous la forme de particules sphériques, le procédé comprenant au moins les étapes suivantes :
a) réaction en milieu aqueux, à une température θ et sous agitation, entre un sel de zinc ou de cobalt et au moins un ligand choisi parmi l'imidazole et ses dérivés, moyennant quoi un précipité est obtenu ; et
b) récupération du précipité ;
et est caractérisé en ce que, à l'étape a), le(s) ligand(s) est (sont) présent(s) dans le milieu aqueux à une concentration au moins égale à sa (leur) limite de solubilité dans l'eau à la température θ.

Elle se rapporte également à un procédé de préparation d'un oxyde simple ou mixte de zinc ou de cobalt se présentant sous la forme de particules sphériques, ce procédé mettant en oeuvre ledit procédé de synthèse.

Applications : photocatalyse, séparation, adsorption, stockage de gaz, fabrication de dispositifs électroniques, de capteurs chimiques et de sondes luminescentes, domaines de la santé et de la cosmétique, fabrication d'électrodes.

## Description

### Domaine technique

L'invention se rapporte au domaine de la synthèse de matériaux hybrides organiques-inorganiques.

Plus spécifiquement, l'invention se rapporte à un procédé de synthèse d'un matériau à structure imidazolate zéolithique, classiquement dénommé ZIF (pour « *Zeolitic Imidazolate Framework* » en anglais), qui comprend du zinc ou du cobalt et qui a pour caractéristique, de se présenter sous la forme de particules sphériques.

Elle se rapporte également à un procédé de préparation d'un oxyde simple ou mixte de zinc ou de cobalt qui met en oeuvre ce procédé de synthèse et qui conduit à un oxyde de zinc ou de cobalt se présentant également sous la forme de particules sphériques.

L'invention trouve notamment application dans tous les domaines où des ZIFs sont susceptibles d'être utilisés et, notamment, la catalyse et plus spécifiquement la photocatalyse, la séparation, l'adsorption et/ou le stockage de gaz, la fabrication de dispositifs électroniques, de capteurs chimiques et de sondes luminescentes, ainsi que dans les domaines de la santé et de la cosmétique, par exemple pour l'administration et la libération contrôlée de principes d'actifs.

Elle trouve également application dans les domaines d'utilisation de particules d'un oxyde simple ou mixte de zinc ou de cobalt tels que, dans le cas de particules d'un oxyde simple, la fabrication de verres, de céramiques et la préparation de compositions de crèmes solaires et, dans le cas de particules d'un oxyde mixte, la fabrication d'électrodes, par exemple, de type LCO (pour « *Lithium Cobalt Oxide* » en anglais) pour batteries lithium-ion.

### État de la technique antérieure

Depuis une dizaine d'années, les ZIFs, qui représentent une sous-classe des MOFs (pour « *Metal-Organic Framework* » en anglais), sont l'objet de toutes les attentions en raison de leurs propriétés uniques (porosité élevée, haute surface spécifique, hydrophobie, biocompatibilité, grande stabilité à la fois chimique et thermique, nombreuses possibilités de fonctionnalisation, etc.) qui leur confèrent un très large éventail d'applications.

Ces matériaux sont constitués d'un assemblage régulier et tridimensionnel d'entités organiques et inorganiques, formé par itération de centres métalliques (plus précisément de cations métalliques) reliés entre eux par l'intermédiaire de ligands qui établissent des liaisons de coordination avec ces centres métalliques.

Plus spécifiquement, les ZIFs sont constitués d'un assemblage d'unités tétraédriques au centre desquelles se trouve un cation métallique divalent qui est lié à quatre atomes d'azote - chacun provenant d'un ligand imidazolate - représentant les quatre sommets des tétraèdres. Les tétraèdres sont connectés entre eux par leurs sommets, c'est-à-dire que chaque ligand est partagé entre deux tétraèdres.

Un certain nombre de voies de synthèse de ZIFs ont été proposées parmi lesquelles on peut citer les voies solvothermale, hydrothermale, solvo/hydrothermale, sonochimique, mécanochimique, électrochimique et microfluidique (en microréacteur).

Les particules des ZIFs obtenus par ces différentes voies de synthèse ont soit une morphologie irrégulière, voire anarchique, soit une morphologie régulière, typiquement de dodécaèdres rhombiques, de dodécaèdres rhombiques tronqués, de cubes ou de feuillets.

Il s'avère que, pour leur utilisation dans certains domaines d'applications, il serait souhaitable de disposer de ZIFs se présentant aussi sous la forme de sphères.

C'est ainsi qu'il a été proposé par Shunsuke Tanaka et *al.* (*ACS Omega* 2017, 2, 6737-6445) un procédé de synthèse d'un ZIF-8 permettant d'obtenir des particules sphériques. Ce procédé consiste à transformer un mélange aqueux d'acétate de zinc et de 2-méthylimidazole en une poudre par séchage par atomisation et à disperser la poudre ainsi obtenue dans du méthanol ou du butanol, les particules de ZIF étant ensuite récupérées par centrifugation.

Si ce procédé présente indéniablement un intérêt, il a néanmoins l'inconvénient de nécessiter l'utilisation d'un équipement spécifique, à savoir un sécheur-atomiseur, ainsi que celui d'utiliser des solvants organiques, plus coûteux, plus toxiques et moins respectueux de l'environnement que l'eau.

Les inventeurs se sont donc fixé pour objectif de fournir un procédé de synthèse d'un ZIF qui conduise à l'obtention de ce ZIF sous la forme de sphères et qui ne présente pas ces inconvénients.

### Exposé de l'invention

Cet objectif est atteint par l'invention qui propose, en premier lieu, un procédé de synthèse d'un matériau à structure imidazolate zéolithique - qui sera plus simplement appelé ZIF dans ce qui suit - comprenant du zinc ou du cobalt et se présentant sous la forme de particules sphériques, lequel procédé comprend au moins les étapes suivantes :
a) réaction en milieu aqueux, à une température θ et sous agitation, entre un sel de zinc ou de cobalt et au moins un ligand choisi parmi l'imidazole et ses dérivés, moyennant quoi un précipité est obtenu ; et
b) récupération du précipité ;
et est caractérisé en ce que, à l'étape a), le(s) ligand(s) est (sont) présent(s) dans le milieu aqueux à une concentration au moins égale à sa (leur) limite de solubilité dans l'eau à la température θ.

Les Inventeurs ont en effet observé que, de manière surprenante, la réaction en milieu aqueux entre un sel de zinc ou de cobalt et un ou plusieurs ligands choisis parmi l'imidazole et ses dérivés conduit à l'obtention d'un ZIF sous la forme de particules sphériques à condition que le milieu aqueux lors de la réaction soit saturé en ligand(s).

Dans ce qui précède et ce qui suit, les termes « *matériau [...] se présentant sous la forme de particules sphériques* » désignent un matériau dont les particules sont des sphères parfaites ou des quasi-sphères, c'est-à-dire des sphères dont le rapport entre la dimension maximale (Dₘₐₓ) et la dimension minimale (Dₘᵢₙ) est inférieur à 1,2.

Par ailleurs, la limite de solubilité du (des) ligand(s) s'entend comme la concentration maximale (massique ou molaire) à laquelle ce(s) ligand(s) peu(ven)t être dissous dans le milieu aqueux et, plus généralement, dans de l'eau à la température de la réaction entre le sel de zinc ou de cobalt et ce ligand, c'est-à-dire à la température θ. Typiquement, un ligand de type imidazole présente une limite de solubilité dans l'eau au moins égale à 2 g/L à 30 °C.

Conformément à l'invention, le ou les ligands répondent préférentiellement à la formule (I) ci-après : 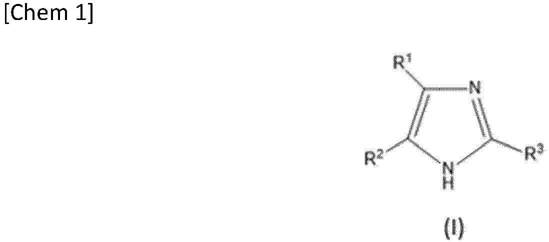 dans laquelle :
- R¹ et R² représentent, indépendamment l'un de l'autre, un atome d'hydrogène, un groupe alkyle linéaire ou ramifié en C₁ à C₄, un atome d'halogène, un groupe amino ou un groupe nitro, ou bien R¹ et R² forment ensemble un groupe phényle éventuellement substitué une ou plusieurs fois ; et
- R³ représente un atome d'hydrogène, un groupe alkyle linéaire ou ramifié en C₁ à C4, un atome d'halogène, un groupe amino ou un groupe nitro.

On précise que l'on entend :
- par « *groupe alkyle linéaire ou ramifié en C₁ à C₄* », tout groupe alkyle (i.e. de formule CₙH₂ₙ₊₁) comprenant 1, 2, 3 ou 4 atomes de carbone et dont la chaîne, dans le cas où il est en C₄, peut être linéaire ou comprendre une ramification ; et
- par « *un groupe phényle éventuellement substitué une ou plusieurs fois »,* un groupe phényle dont l'atome d'hydrogène porté par un ou plusieurs atomes de carbone du cycle est remplacé par un substituant tel qu'un atome d'halogène, un groupe alkyle linéaire ou ramifié en Ci-à C₄, un groupe amino ou un groupe nitro.

Plus particulièrement, lorsque R¹, R² et/ou R³ représentent un groupe alkyle linéaire ou ramifié en C₁ à C₄, ils peuvent être choisis, indépendamment les uns des autres, parmi un groupe méthyle et un groupe éthyle.

Aussi, dans la formule (I) ci-avant, on préfère que :
- R¹ et R² représentent, indépendamment l'un de l'autre, un atome d'hydrogène, un groupe méthyle, un groupe éthyle, un atome d'halogène, un groupe amino ou un groupe nitro, ou bien R¹ et R² forment ensemble un groupe phényle ; et
- R³ représente un atome d'hydrogène, un groupe méthyle, un groupe éthyle, un atome d'halogène, un groupe amino ou un groupe nitro.

Plus particulièrement, on préfère que :
- R¹ et R² représentent un atome d'hydrogène ou bien que R¹ et R² forment ensemble un groupe phényle ; et
- R³ représente un atome d'hydrogène, un groupe méthyle ou un groupe éthyle.

Plus encore, on préfère que le ou les ligands présentent une partie hydrophobe, ce qui est notamment le cas des ligands répondant à la formule (I) ci-dessus dans laquelle R¹ et R² forment ensemble un groupe phényle.

Parmi ceux-ci, toute préférence est donnée au benzimidazole qui répond à la formule suivante :

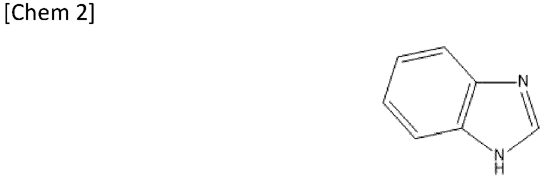

Auquel cas, le ZIF synthétisé est soit un ZIF-7-III (si le benzimidazole est associé à du zinc) soit un ZIF-9-III (si le benzimidazole est associé à du cobalt).

En variante toutefois, il est tout à fait possible de mettre à profit le procédé de synthèse de l'invention pour synthétiser des ZIFs autres qu'un ZIF-7 ou un ZIF-9, comme, par exemple, un ZIF-8 ou un ZIF-67 et ce, en utilisant du 2-méthylimidazole comme ligand, ce ligand étant associé à du zinc dans le ZIF-8 ou à du cobalt dans le ZIF-67.

De préférence, le sel de zinc ou de cobalt est choisi parmi les nitrates et les sulfates de zinc ou de cobalt, avantageusement sous forme hydratée.

Conformément à l'invention, la température θ à laquelle la réaction de l'étape a) est réalisée, est de préférence comprise entre 20 °C et 80 °C, par exemple de 40 °C. L'agitation est, elle, de préférence maintenue pendant plusieurs heures, par exemple, entre 6 heures et 12 heures.

Avantageusement, à l'étape a), le ratio molaire zinc/ligand(s) ou cobalt/ligand(s) du milieu aqueux est compris entre1/16 et 1/25.

Conformément à l'invention, l'étape b) visant à récupérer le précipité peut être réalisée par toute technique de séparation solide-liquide connue, par exemple par filtration, notamment sous vide, ou centrifugation, et peut être suivie, si nécessaire, d'une étape visant à sécher les particules, par exemple en étuve.

Les particules du ZIF obtenu à l'issue du procédé de synthèse présentent une taille moyenne en volume comprise, de préférence, entre 1 µm et 40 µm et, mieux encore, entre 10 µm et 25 µm.

À cet égard, on précise que l'on entend par « *taille* », le diamètre des particules dans le cas où ce sont des sphères parfaites, ou le diamètre de cercles qui présenteraient la même surface que les particules (ou diamètre équivalent) dans le cas où ce sont des quasi-sphères.

Comme connu en soi, la taille des particules peut être déterminée par granulométrie par diffraction de la lumière, par exemple au moyen d'un granulomètre laser tel que celui commercialisé sous la référence Mastersizer^{™} 3 000 par Malvern Panalytical, ou bien par morphogranulométrie, par exemple au moyen du morphogranulomètre commercialisé sous la référence Morphologi^{™} G3, également par Malvern Panalytical, ou bien encore à l'aide d'un microscope électronique à balayage (dit MEB) et d'un logiciel de traitement d'image.

Il a été observé que, grâce au procédé de synthèse de l'invention, les particules de ZIF issues d'une même synthèse, c'est-à-dire les particules de ZIF d'un même lot, sont avantageusement monodisperses.

Les Inventeurs ayant également observé que, de manière surprenante, la calcination des particules d'un ZIF obtenu par le procédé de synthèse de l'invention conduit à des particules d'un oxyde de zinc ou de cobalt ayant conservé la forme sphérique des particules du ZIF.

Aussi, l'invention a-t-elle également pour objet un procédé de préparation d'un oxyde simple de zinc ou de cobalt se présentant sous la forme de particules sphériques, lequel procédé comprend les étapes suivantes :
i) une étape de synthèse d'un ZIF comprenant du zinc ou du cobalt et se présentant sous la forme de particules sphériques, par la mise en oeuvre du procédé de synthèse tel que défini précédemment ; puis
ii) une étape de calcination du ZIF ainsi obtenu.

L'invention a-t-elle aussi pour objet un procédé de préparation d'un oxyde mixte de zinc ou de cobalt se présentant sous la forme de particules sphériques, lequel procédé comprend les étapes suivantes :
i) une étape de synthèse d'un ZIF comprenant du zinc ou du cobalt et se présentant sous la forme de particules sphériques, par la mise en oeuvre du procédé de synthèse tel que défini précédemment ; puis
ii) une étape de mélange du ZIF ainsi synthétisé avec un autre composé comprenant un élément métallique autre que le zinc et le cobalt ; et
iii) une étape de calcination du mélange comprenant le ZIF et l'autre composé.

Plus particulièrement, dans le cas de la préparation d'un oxyde mixte de cobalt, l'autre composé comprenant un élément métallique autre que le zinc et le cobalt peut être du LiOH ou du Li₂CO₃.

De préférence, l'oxyde mixte est un oxyde LiCoO₂ qui, comme connu en soi, peut être utilisé pour la fabrication d'électrodes de type LCO pour batteries lithium-ion.

L'étape de calcination (étape ii) du procédé de préparation d'un oxyde simple et étape iii) du procédé de préparation d'un oxyde mixte) est avantageusement réalisée à une température comprise entre 600 °C et 1 000 °C et ce, sous une atmosphère oxydante, typiquement de l'air.

D'autres caractéristiques et avantages de l'invention ressortiront du complément de description qui suit et qui se réfère aux figures annexées.

Il va de soi que ce complément de description n'est donné qu'à titre d'illustration de l'objet de l'invention et ne doit en aucun cas être interprété comme une limitation de cet objet.

### Brève description des figures

[Fig. 1] illustre le diffractogramme de rayons X (DRX) d'un premier ZIF-7-III obtenu par le procédé de synthèse de l'invention en utilisant un nitrate de zinc comme sel et, à titre de comparaison, le DRX théorique d'un ZIF-7-III.
[Fig. 2] est une image prise au MEB, à un grossissement de x3 000, d'une particule du premier ZIF-7-III.
[Fig. 3] illustre la distribution granulométrique en volume du premier ZIF-7-III ; sur cette figure, l'axe des abscisses représente le diamètre des particules (noté D et exprimé en µm), tandis que les axes des ordonnées représentent respectivement, le pourcentage de particules (axe des ordonnées de gauche) et le pourcentage cumulé de particules (axe des ordonnées de droite).
[Fig. 4] illustre le DRX d'un oxyde de zinc obtenu à partir du premier ZIF-7-III et, à titre de comparaison, le DRX théorique de l'oxyde de zinc.
[Fig. 5] est une image prise au MEB, à un grossissement de x10 000, d'une particule de l'oxyde de zinc obtenu à partir du premier ZIF-7-III.
[Fig. 6] est une figure analogue à la figure 1 mais pour un deuxième ZIF-7-III obtenu par le procédé de synthèse de l'invention en utilisant un sulfate de zinc comme sel.
[Fig. 7] est image analogue à celle de la figure 2 mais pour le deuxième ZIF-III.
[Fig. 8] est une figure analogue à la figure 3 mais pour des particules du deuxième ZIF-7-III.
[Fig. 9] est une figure analogue à la figure 4 mais pour un oxyde de zinc obtenu à partir du deuxième ZIF-7-III.
[Fig. 10] est une image prise au MEB, à un grossissement de x5 500, d'une particule de l'oxyde de zinc obtenu à partir du deuxième ZIF-7-III.
[Fig. 11] illustre les DRX de deux ZIF-9-III obtenus par le procédé de synthèse de l'invention, en utilisant comme sel un sulfate de cobalt pour le premier et un nitrate de cobalt pour le deuxième, et, à titre de comparaison, le DRX théorique d'un ZIF-9-III.
[Fig. 12] est une image prise au MEB, à un grossissement de x2 500, d'une particule du premier ZIF-9-III.
[Fig. 13] est une image prise au MEB, à un grossissement de x3 000, d'une particule du deuxième ZIF-9-III.
[Fig. 14] et [Fig. 15] illustrent les distributions granulométriques en volume des premier et deuxième ZIF-9-III ; sur ces figures, l'axe des abscisses représente le diamètre des particules (noté D et exprimé en µm), tandis que les axes des ordonnées représentent respectivement, le pourcentage de particules (axe des ordonnées de gauche) et le pourcentage cumulé de particules (axe des ordonnées de droite).

### Exposé détaillé de modes de mises en oeuvre particuliers

### Exemple 1 : synthèse d'un premier ZIF-7-III et préparation d'un oxyde de zinc à partir de ce ZIF

On synthétise un premier ZIF-7-III par le procédé de synthèse de l'invention en utilisant un nitrate de zinc comme sel et le benzimidazole comme ligand.

Pour ce faire, 0,506 g de nitrate de zinc hexahydraté sont tout d'abord dissous dans 15 mL d'eau distillée, puis 3,544 g de benzimidazole (soit un ratio molaire zinc/benzimidazole de 1/17) sont ajoutés.

Le mélange obtenu est introduit dans un récipient de réaction en téflon^{™} puis est chauffé à 40 °C, sous agitation, pendant 12 heures.

Il se forme ainsi un précipité qui est récupéré par filtration sous vide, conduisant à l'obtention d'une poudre.

La poudre est ensuite analysée par DRX et le diffractogramme obtenu est comparé au diffractogramme théorique d'un ZIF-7-III.

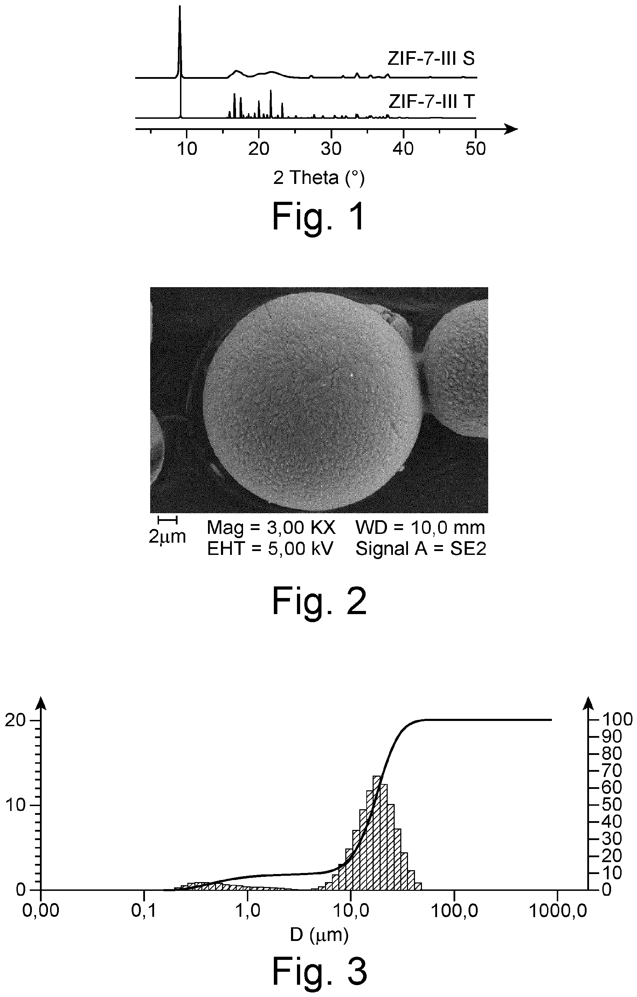

Ces deux diffractogrammes sont illustrés sur la figure 1, le premier étant noté ZIF-7-III S (pour synthétisé) et le second ZIF-7-III T (pour théorique).

Comme le montre cette figure, ces deux diffractogrammes présentent le même pic caractéristique à 8,99 °, ce qui confirme que le procédé de synthèse de l'invention a bien permis d'obtenir un ZIF-7-III.

La poudre est aussi observée au MEB. Comme illustré par l'image MEB de la figure 2, les résultats de cette observation confirment que le ZIF-7-III synthétisé selon l'invention se présente sous la forme de particules sphériques. Ils indiquent de plus que ces particules ont une taille comprise entre 10 µm et 20 µm.

Enfin, comme visible sur la figure 3, une analyse granulométrique en volume de la poudre, au moyen du granulomètre laser Mastersizer^{™} (Malvern Panalytical), montre que le diamètre moyen des particules se situe à 16,71 µm.

La poudre est ensuite calcinée à 850 °C pendant quatre heures pour convertir le ZIF-7-III en un oxyde de zinc, puis le produit résultant est analysé par DRX et le diffractogramme obtenu est comparé au diffractogramme théorique de l'oxyde de zinc.

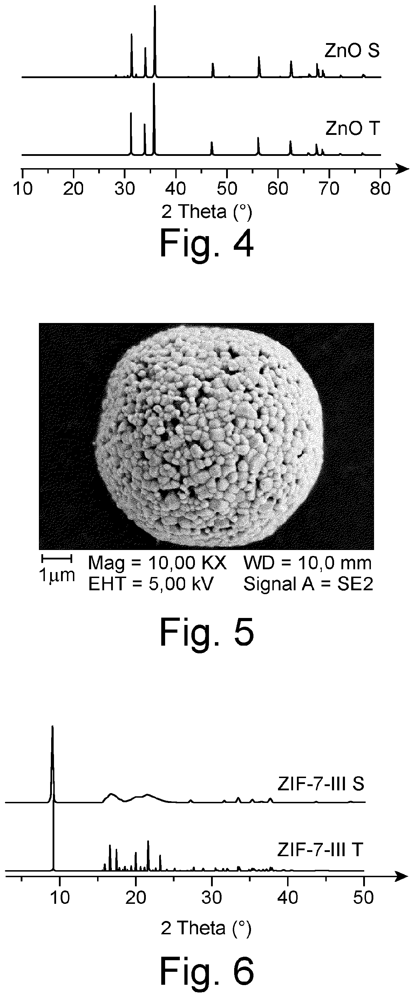

Ces deux diffractogrammes sont illustrés sur la figure 4, le premier étant noté ZnO S et le second ZnO T.

Comme le montre cette figure, ces deux diffractogrammes sont identiques, ce qui confirme que le ZIF-7-III a bien été converti en oxyde de zinc par calcination.

Par ailleurs, la figure 5, qui illustre une image prise au MEB d'une particule de l'oxyde de zinc obtenu, montre que ce dernier a conservé la forme sphérique du ZIF-7-III à partir duquel il a été obtenu.

### Exemple 2 : synthèse d'un deuxième ZIF-7-III et préparation d'un oxyde de zinc à partir de ce ZIF

On synthétise un deuxième ZIF-7-III par le procédé de synthèse de l'invention en utilisant cette fois-ci du sulfate de zinc heptahydraté comme sel et le benzimidazole comme ligand.

Pour ce faire, 0,489 g de sulfate de zinc heptahydraté sont tout d'abord dissous dans 15 mL d'eau distillée, puis 3,544 g de benzimidazole (soit un ratio molaire zinc/benzimidazole de 1/17) sont ajoutés.

Là aussi, il se forme un précipité qui est récupéré par filtration sous vide, permettant l'obtention d'une poudre.

Cette poudre est ensuite analysée par DRX et le diffractogramme obtenu est comparé au diffractogramme théorique d'un ZIF-7-III.

Ces deux diffractogrammes sont illustrés sur la figure 6, qui est une figure analogue à la figure 1 mais pour ce deuxième ZIF-7-III.

Cette figure montre que les deux diffractogrammes présentent le même pic caractéristique à 8,93 °, ce qui confirme, là encore, que le procédé de synthèse de l'invention a bien permis d'obtenir un ZIF-7-III.

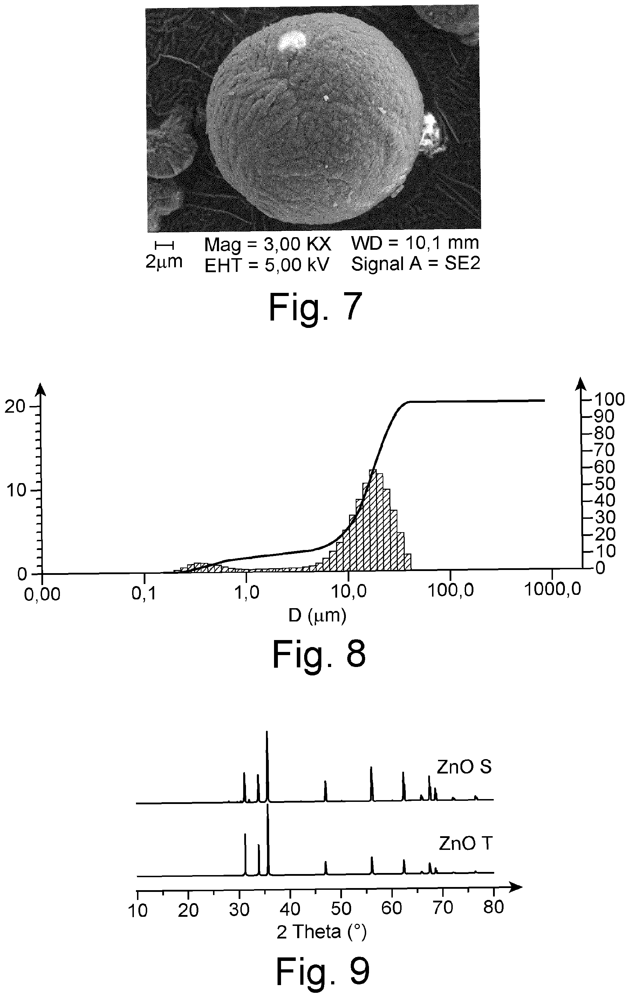

La poudre est aussi observée au MEB. Comme illustré par l'image MEB de la figure 7, les résultats de cette observation confirment, une fois de plus, que le ZIF-7-III synthétisé selon l'invention se présente sous la forme de particules sphériques. Ils indiquent de plus que ces particules ont une taille comprise entre 10 µm et 20 µm.

Par ailleurs, comme montré sur la figure 8, une analyse granulométrique en volume de la poudre, au moyen du granulomètre laser Mastersizer^{™}, montre que le diamètre moyen des particules se situe à 15,93 µm.

La poudre est ensuite calcinée à 850 °C pendant quatre heures pour convertir le ZIF-7-III en un oxyde de zinc, puis le produit résultant est analysé par DRX et le diffractogramme obtenu est comparé au diffractogramme théorique de l'oxyde de zinc (figure 9).

La figure 9 montre que le diffractogramme de l'oxyde de zinc obtenu à partir de ce deuxième ZIF-7-III est identique au diffractogramme théorique de l'oxyde de zinc, ce qui confirme, une fois de plus, que le ZIF-7-III a bien été converti en oxyde de zinc par calcination.

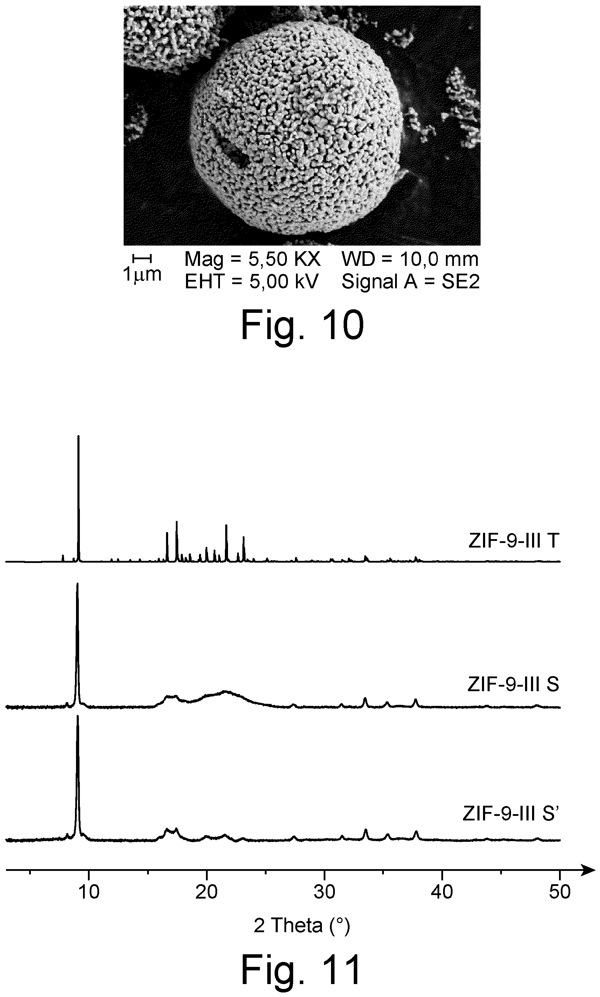

La figure 10, quant à elle, illustre une image prise au MEB d'une particule de l'oxyde de zinc obtenu et montre que ce dernier a aussi conservé la forme sphérique du ZIF-7-III à partir duquel il a été obtenu.

### Exemple 3 : synthèse de deux ZIF-9-III et préparation d'oxydes de cobalt à partir de ces ZIFs

Cet exemple illustre la synthèse de deux ZIF-9-III par le procédé de synthèse de l'invention en utilisant du benzimidazole comme ligand et du sulfate de cobalt heptahydraté comme sel - pour le premier ZIF-9-III - et du nitrate de cobalt hexahydraté comme sel - pour le deuxième ZIF-9-III.

Pour ce faire, pour le premier ZIF-9-III, 0,478 g de sulfate de cobalt heptahydraté sont tout d'abord dissous dans 15 mL d'eau distillée, puis 3,544 g de benzimidazole (soit un ratio molaire cobalt/benzimidazole de 1/17) sont ajoutés.

Pour le deuxième ZIF-9-III, 0,495 g de nitrate de cobalt hexahydraté sont dissous dans 15 mL d'eau distillée puis 3,544 g de benzimidazole (soit un ratio molaire cobalt/benzimidazole de 1/17) sont ajoutés.

À l'issue de chacune de ces deux synthèses, il se forme un précipité qui est récupéré par filtration sous vide, permettant l'obtention d'une poudre.

Ces poudres sont analysées par DRX et les diffractogrammes obtenus sont comparés au diffractogramme théorique d'un ZIF-9-III.

Ces diffractogrammes sont illustrés sur la figure 11, le premier étant noté ZIF-9-III T, le deuxième étant noté ZIF-9-III S (correspondant au premier ZIF-9-III) et le troisième étant noté ZIF-9-III S' (correspondant au deuxième ZIF-9-III).

Comme le montre cette figure, ces trois diffractogrammes présentent le même pic caractéristique à 9,04 °, ce qui confirme ici que le procédé de synthèse de l'invention a bien permis d'obtenir deux ZIF-9-III.

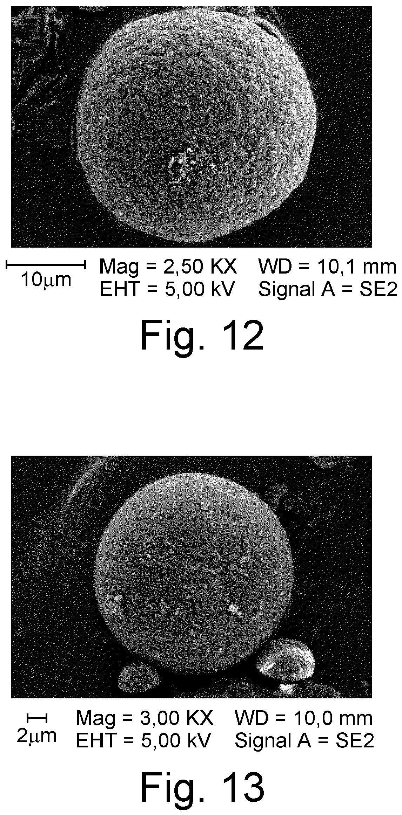

Les poudres obtenues à l'issue de ces deux synthèses sont aussi observées au MEB. Comme illustré par les images MEB des figures 12 et 13, les résultats de ces observations confirment que les ZIF-9-III synthétisés selon l'invention se présentent sous la forme de particules sphériques. Ils indiquent de plus que ces particules ont une taille comprise entre 10 µm et 20 µm.

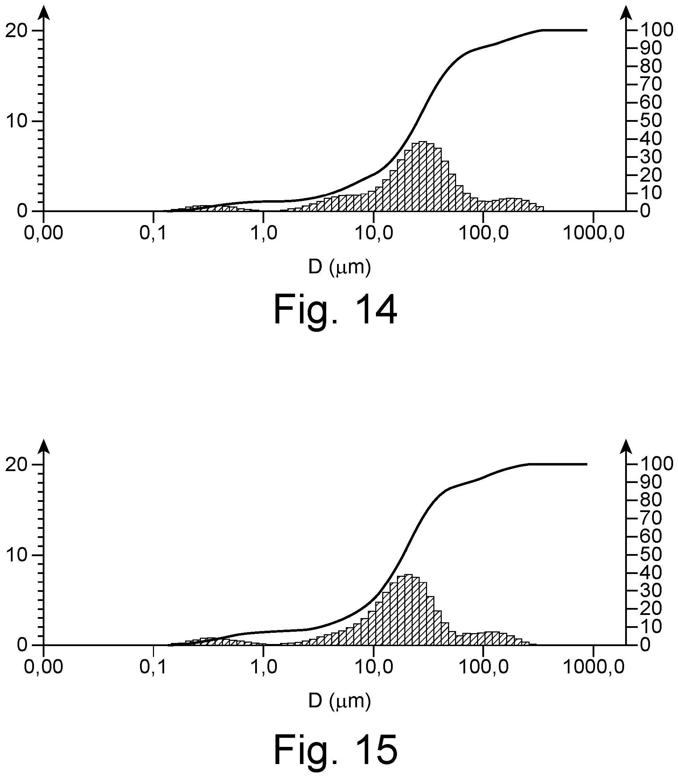

Par ailleurs, comme visible sur les figures 14 et 15, une analyse granulométrique en volume des poudres, au moyen du granulomètre laser Mastersizer^{™}, montre que le diamètre moyen des particules se situe à 25,34 µm (pour le premier ZIF-9-III - figure 14) et à 18,60 µm (pour le deuxième ZIF-9-III - figure 15).

### Référence citée

Shunsuke Tanaka et al., *ACS Omega* 2017, 2, 6737-6445.

## Revendications

1. Procédé de synthèse d'un matériau à structure imidazolate zéolithique comprenant du zinc ou du cobalt et se présentant sous la forme de particules sphériques, le procédé comprenant au moins les étapes suivantes :
a) réaction en milieu aqueux, à une température θ et sous agitation, entre un sel de zinc ou de cobalt et au moins un ligand choisi parmi l'imidazole et ses dérivés, moyennant quoi un précipité est obtenu ; et
b) récupération du précipité ;
et **caractérisé en ce que**, à l'étape a), le(s) ligand(s) est (sont) présent(s) dans le milieu aqueux à une concentration au moins égale à sa (leur) limite de solubilité dans l'eau à la température θ.

2. Procédé de synthèse selon la revendication 1, dans lequel le(s) ligand(s) répond(ent) à la formule (I) ci-dessous : 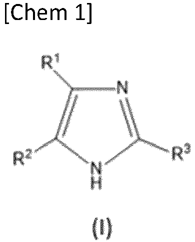 dans laquelle :
- R¹ et R² représentent, indépendamment l'un de l'autre, un atome d'hydrogène, un groupe alkyle linéaire ou ramifié en C₁ à C₄, un atome d'halogène, un groupe amino ou un groupe nitro, ou bien R¹ et R² forment ensemble un groupe phényle éventuellement substitué une ou plusieurs fois ; et
- R³ représente un atome d'hydrogène, un groupe alkyle linéaire ou ramifié en C₁ à C₄, un atome d'halogène, un groupe amino ou un groupe nitro.

3. Procédé de synthèse selon la revendication 2, dans lequel :
- R¹ et R² représentent, indépendamment l'un de l'autre, un atome d'hydrogène, un groupe méthyle, un groupe éthyle, un atome d'halogène, un groupe amino ou un groupe nitro, ou bien R¹ et R² forment ensemble un groupe phényle ; et
- R³ représente un atome d'hydrogène, un groupe méthyle, un groupe éthyle, un atome d'halogène, un groupe amino ou un groupe nitro

4. Procédé de synthèse selon la revendication 2 ou la revendication 3, dans lequel :
- R¹ et R² représentent un atome d'hydrogène ou bien R¹ et R² forment ensemble un groupe phényle ; et
- R³ représente un atome d'hydrogène, un groupe méthyle ou un groupe éthyle.

5. Procédé de synthèse selon l'une quelconque des revendications 2 à 4, dans lequel R¹ et R² forment ensemble un groupe phényle.

6. Procédé de synthèse selon l'une quelconque des revendications 1 à 5, dans lequel le(s) ligand(s) répond(ent) à la formule ci-dessous :

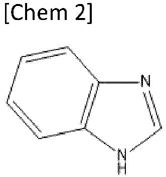

7. Procédé de synthèse selon l'une quelconque des revendications 1 à 6, dans lequel le sel de zinc ou de cobalt est choisi parmi les nitrates et les sulfates de zinc ou de cobalt.

8. Procédé de synthèse selon l'une quelconque des revendications 1 à 7, dans lequel la température θ est comprise entre 20 °C et 80 °C.

9. Procédé de synthèse selon l'une quelconque des revendications 1 à 8, dans lequel les particules du matériau obtenu à l'issue de l'étape b), présentent une taille moyenne en volume comprise entre 1 µm et 40 µm et, mieux encore, comprise entre 10 µm et 25 µm.

10. Procédé de préparation d'un oxyde simple de zinc ou de cobalt se présentant sous la forme de particules sphériques, le procédé comprenant les étapes suivantes :
i) une étape de synthèse d'un matériau à structure imidazolate zéolithique comprenant du zinc ou du cobalt et se présentant sous la forme de particules sphériques, par la mise en oeuvre du procédé de synthèse selon l'une quelconque des revendications 1 à 9 ; puis
ii) une étape de calcination du matériau ainsi obtenu.

11. Procédé de préparation d'un oxyde simple selon la revendication 10, dans lequel l'étape de calcination est réalisée sous une atmosphère oxydante et à une température comprise entre 600 °C et 1 000 °C.

12. Procédé de préparation d'un oxyde mixte de zinc ou de cobalt se présentant sous la forme de particules sphériques, le procédé comprenant les étapes suivantes :
i) une étape de synthèse d'un matériau à structure imidazolate zéolithique comprenant du zinc ou du cobalt et se présentant sous la forme de particules sphériques, par la mise en oeuvre du procédé de synthèse selon l'une quelconque des revendications 1 à 9 ; puis
ii) une étape de mélange du matériau ainsi synthétisé avec un autre composé comprenant un élément métallique autre que le zinc et le cobalt ; et
iii) une étape de calcination du mélange comprenant le matériau et l'autre composé.

13. Procédé de préparation d'un oxyde mixte selon la revendication 12, dans lequel l'étape de calcination est réalisée sous une atmosphère oxydante et à une température comprise entre 600 °C et 1 000 °C.
